(19) Europäisches Patentamt European Patent Office Office européen des brevets

(11) **EP 4 468 924 B1**

(12) **EUROPEAN PATENT SPECIFICATION**

(45) Date of publication and mention of the grant of the patent:
**15.04.2026 Bulletin 2026/16**

(21) Application number: **23706879.6**

(22) Date of filing: **26.01.2023**

(51) International Patent Classification (IPC):
*A47J 31/52* *(2006.01)*

(52) Cooperative Patent Classification (CPC):
**A47J 31/521; A47J 31/5255**

(86) International application number:
**PCT/IT2023/050022**

(87) International publication number:
**WO 2023/144852 (03.08.2023 Gazette 2023/31)**

(54) **METHOD AND MACHINE FOR PREPARING COFFEE BEVERAGES**

VERFAHREN UND MASCHINE ZUR ZUBEREITUNG VON KAFFEEGETRÄNKEN

PROCÉDÉ ET MACHINE DE PRÉPARATION DE BOISSONS AU CAFÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.01.2022 IT 202200001391**

(43) Date of publication of application:
**04.12.2024 Bulletin 2024/49**

(73) Proprietor: **De' Longhi Appliances S.r.l. Con Unico Socio**
**31100 Treviso (IT)**

(72) Inventors:
• **PANCIERA, Antonio**
**31100 Treviso (IT)**
• **GENTILI, Ivano**
**31100 Treviso (IT)**
• **LEVER, Nicola**
**31100 Treviso (IT)**
• **ROSETTA, Simone**
**31100 Treviso (IT)**

(74) Representative: **Petraz, Gilberto Luigi et al**
**GLP S.r.l.**
**Viale Europa Unita, 171**
**33100 Udine (IT)**

(56) References cited:
**WO-A1-2021/199096      WO-A1-2021/259548**
**WO-A1-2022/003743      US-A1- 2020 093 321**

**Description**

FIELD OF APPLICATION

The present invention relates to a method for a machine for preparing coffee beverages, and to a relative machine, of domestic or semi-professional type, implementing such a method, which provide to adapt the parameters of a pre-infusion step as a function of the characteristics of the coffee beans used and/or the granulometry level of a coffee powder.

BACKGROUND ART

It is known that preparing a coffee beverage by the infusion of a coffee powder requires setting and controlling a plurality of different setting parameters, related to one or more components of the machine, which can affect the infusion process. In fact, the setting parameters set, in turn, influence and determine the operating parameters of the machine, on which the quality of the prepared beverage depends.

It is also known to perform a pre-infusion step of the coffee powder before the actual infusion step, in order to evenly and uniformly wet the coffee powder and prevent the formation of preferential channels for the water through the dose of coffee, so as to optimize the extraction quantity of the soluble solids from the roasted coffee.

It is also known to modify the parameters of the pre-infusion and/or infusion step in order to optimize the quality of the beverage in the cup, especially in professional machines, but a high level of experience is generally necessary in order to make the changes in an effective manner.

To this end, professional, or even domestic, types of machines for the production of coffee are known which allow to manually modify one or more machine setting parameters, such as the pressure of the infusion chamber, the temperature and/or the quantity of infusion water, or possibly also the granulometry of the coffee powder and the quantity of coffee used for each beverage, going to modify the settings of one or more components, such as the heating means, the water feed means, or the coffee powder grinding device, the dosing device and others.

WO-A-2022/003743, WO-A-2021/259548, WO-A-2021/199096 and US-A-2020/093321 disclose known machines and methods for preparing coffee beverages.

Automatic machines for preparing coffee beverages are also known which provide to automatically set the setting parameters on the basis of defined profiles, for example, on the basis of the type of coffee beans used or even on the tastes of a user.

However, such known solutions generally provide to set specific predefined parameters that remain substantially fixed over time, or are modified as a result of commands provided by a user.

A drawback of the known solutions is given by the fact that the extraction of a beverage depends on numerous factors, some of which may change over time, for example due to the wear of one or more components, such as the grinders of a grinding device, or the accumulation of limestone in a boiler, or still others.

Therefore, there is a need to improve a method and a relative machine for preparing coffee beverages, which can overcome at least one of the drawbacks of the prior art.

In particular, an object of the present invention is to provide a method and a machine for preparing coffee beverages which allow to adapt the functioning of the machine that also allow an inexperienced user to obtain a good coffee beverage in objective terms without requiring onerous attempts to modify by successive approximations the settings of one or more operating parameters of the machine.

A further object is to devise a method that allows to obtain an optimal extraction of the aromatic substances from the coffee powder for each selection made by the user.

A further object of the present invention is to provide a machine for preparing coffee beverages that allows to always obtain a coffee beverage that has certain properties identifying a high-quality coffee beverage regardless of the type of coffee beans that are used.

A further object is to devise a method for preparing coffee beverages that allows setting the setting parameters and then adjusting the functioning of the machine automatically.

A further object of the present invention is to provide a method and a machine for preparing coffee beverages that allow to keep the setting parameters constant over time and possibly compensate for minimum deviations thereof with respect to predetermined values.

Still another object of the invention is to provide a machine and to devise a method for preparing coffee beverages that are capable of minimizing the wear of the components of the grinding device.

A further object of the present invention is to provide a method and a machine for preparing coffee beverages which is capable of optimizing the extraction of a coffee beverage, adapting the functioning thereof in relation to a granulometry of the coffee powder.

In order to overcome the drawbacks of the prior art, and to obtain the above as well as further objects and benefits, the Applicant has studied, tested, and realized the present invention.

DISCLOSURE OF THE INVENTION

The present invention is expressed and characterized in the independent claims 1 and 12. The dependent claims show other features of the present invention or variants of the main solution proposed.

In accordance with the aforesaid objects and to solve the aforesaid technical problem in a new and original manner, also obtaining considerable advantages with respect to the prior art, a method for a machine for preparing a coffee beverage comprises:

- providing an infusion chamber with a dose of coffee powder;
- performing a pre-infusion step and subsequently an infusion step of said dose of powder and dispensing the beverage.

According to an aspect of the present invention, the method provides to perform at least a first optimization of the operating parameters of said machine as a function of the type of coffee beans and the granulometry level of said powder, in which said first optimization comprises receiving in a control unit an indication regarding the species and the roasting level of said beans and executing an algorithm for defining both a weight of a quantity of coffee to be used for said dose of powder as a function of at least one beverage to be prepared and the species of said beans, and a quantity of water to be used in said pre-infusion step which is determined at least as a function of said defined quantity of coffee and a stoichiometric ratio value dependent on the roasting level of said beans.

According to the invention, "origin" of the beans means at least the species, in particular "Arabica" or "Robusta", although solutions can also be provided in which, in addition to the main species, any minor species such as "Liberica", "Excelsa", etc., are also considered.

According to other embodiments, "origin" of the beans means both the species and further information comprising one or more of place of origin and cultivation, and/or processing, which can influence the density of the coffee powder obtained.

According to another aspect of the invention, the method provides to perform an algorithm for monitoring at least one extraction parameter of said machine over time during the preparation of said beverages to verify that it remains close to a specific defined target value for the set operating parameters, and possibly to automatically modify one or more operating parameters of said pre-infusion step in order to compensate for any detected deviations of said at least one extraction parameter with respect to the defined target value.

According to a still further aspect of the invention, the method provides to compress said dose of powder in said chamber to obtain a pod, to measure the volume of said pod before and after said pre-infusion step, and to compare the two values to verify that the volume of the dry pod is correctly greater than the volume of the wet pod to evaluate if and how to modify said quantity of coffee and/or said quantity of water.

According to another aspect of the invention, the algorithm, i.e., the method provides to verify whether a granulometry level set for said coffee powder is outside a range of defined values and, in the event of a positive result, to modify said granulometry level to bring it back within said range, while in the event of a negative result it provides to modify at least one of said quantity of coffee, said quantity of water or said stoichiometric ratio.

In particular, the method allows to optimize and adapt the functioning of the machine on the basis of the granulometry, in order to obtain the best possible beverage as a function of said parameter, minimizing any adjustments of the grinding device.

According to a further aspect of the invention, the method provides to calculate an activation and deactivation duty cycle with which to command water feed means to supply said defined quantity of water in said chamber in order to keep a duration of said pre-infusion step constant. In other words, the duty cycle varies as a function of the quantity of water which is defined, so as to feed into the chamber all the pre-infusion water required always in a same time interval.

According to another aspect of the invention, the method provides to perform a correction of the operating parameters of said machine as a function of feedback provided by the consumer on the prepared beverage, so as to obtain a second, finer optimization of said machine.

Said second optimization provides in particular to preliminarily verify whether the infusion step has been performed correctly, i.e., if a flow rate measured during the infusion step is or is not within predefined threshold values and possibly to define a new target value for said flow rate, in order to maintain, or return, said flow rate within said threshold values and at the same time make a subsequent beverage corresponding to the consumer's tastes.

Embodiments described herein further relate to a machine for preparing coffee beverages, comprising a coffee bean container, a grinding unit for grinding said beans with different granulometry levels, and an infusion unit provided with a chamber suitable to receive and contain a dose of coffee powder to be infused, which is connected to water feed means and beverage dispensing means, and a user interface by which at least information on the type of coffee beans to be used can be acquired. Said machine further comprises a control unit configured to implement a method according to the invention, to determine at least a quantity of coffee and at least a pre-infusion parameter for said quantity of coffee as a function of the species, the roasting level of the beans and a granulometry level of the coffee powder and to perform at least a first optimization of the operating parameters of said machine.

ILLUSTRATION OF THE DRAWINGS

These and other aspects, features and advantages of the present invention will become clear from the following disclosure of some embodiments, provided merely by way of non-limiting example, with reference to the accompanying drawings in which:

- fig. 1 is a schematic view of a machine for preparing coffee beverages according to the present invention;
- fig. 2 shows in a graph the trend of the granulometry in relation to the density for different types of coffee beans;
- fig. 3 is a block diagram of a method for preparing coffee beverages according to the present invention;

- fig. 4 is a block diagram of an algorithm part followed by the method according to the invention for the correction of the operating parameters;
- fig. 5 is a block diagram of an algorithm part followed by the method according to the invention for monitoring the operating parameters;
- fig. 6 is a block diagram of the verification step of fig. 5.

It should be noted that, in the present disclosure, the phraseology and terminology used, as well as the figures in the accompanying drawings, even as disclosed, have the sole purpose of illustrating and explaining the present invention, since their function is illustrative and not limited to the invention itself, the scope of protection thereof being defined by the claims.

To facilitate understanding, identical reference numbers have been used, where possible, to identify identical common elements in the figures.

DESCRIPTION OF SOME EMBODIMENTS OF THE PRESENT INVENTION

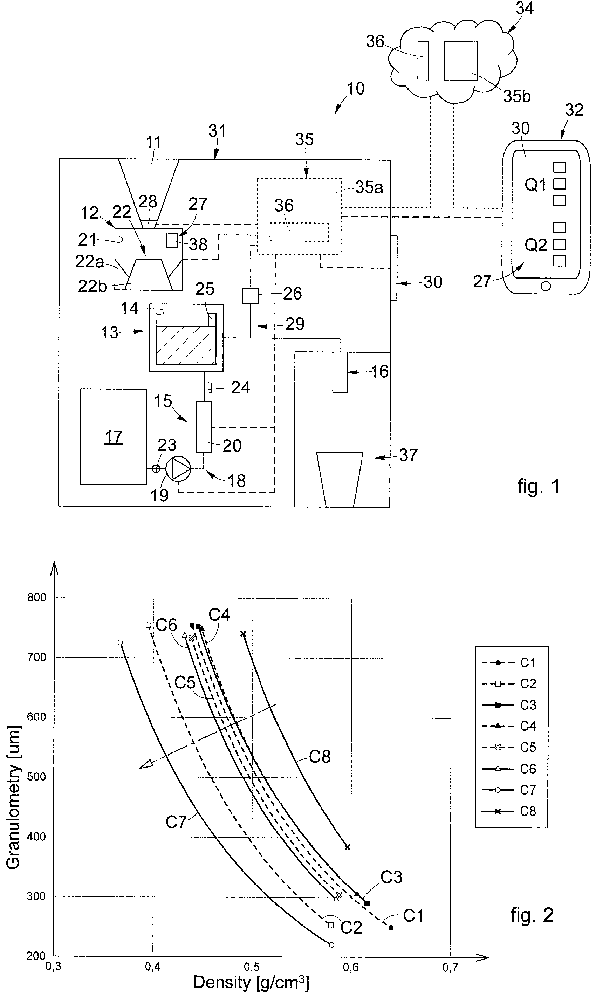

With reference to fig. 1, a machine 10 for preparing a coffee beverage according to the present invention comprises, in a known manner, a coffee bean container 11, a grinding unit 12 for grinding the beans with different granulometry levels, and an infusion unit 13 provided with a chamber 14 suitable to receive and contain a dose of coffee powder to be infused, which is connected to water feed means 15 and to dispensing means 16 of a beverage for dispensing the beverage into a suitable container 37.

The grinding unit 12 can comprise a grinding chamber 21 in which grinding means 22 are arranged, for example two grinders 22a, 22b whose mutual distance can be adjusted to grind the coffee beans with differentiated granulometry as a function of needs. In particular, a plurality of different grinding levels can be provided, for example in a number between 2 and 15.

The machine 10 can further comprise a dosing device 28 configured to dose the quantity of coffee powder to be used for preparing a beverage.

Such a dosing device 28 can be placed upstream, or downstream, of the grinding device 12, and configured to measure the weight and/or volume of the coffee beans before grinding or, respectively, of the already ground coffee powder.

The feed means 15 can comprise, in known manner, a tank 17 and a hydraulic circuit 18 connecting the tank 17 to the chamber 14, along which water feed means 19, for example a pump, and heating means 20, for example a boiler, can be present.

According to embodiments, the machine 10 can further comprise a plurality of sensors 29, each configured to measure a certain extraction parameter during the preparation of a beverage. For example, the machine 10 can comprise one or more of a flow rate detector 23, for example a flow meter, arranged along the hydraulic circuit 18 downstream of the chamber 14, a temperature sensor 24 associated with the heating means 20 or the hydraulic circuit 19 downstream thereof, a pressure sensor 25 associated with the chamber 14, and possibly a further flow rate detector 26 placed downstream of the chamber 14, or one or more sensors suitable for measuring the flow time, i.e., the dispensing time of a beverage, or other parameters.

According to embodiments, the machine 10 can comprise granulometry acquisition means 27, configured to acquire data related to the granulometry level set for the coffee powder.

According to possible embodiment solutions, the granulometry acquisition means 27 can be made in the form of a sensor, or can be made on a user interface 30.

For example, the sensors 29 can comprise a granulometry detector 38 associated with the grinding device 12. The granulometry detector 38 can be made as a position detector, for example configured to detect a distance between the grinders 22a, 22b, or the position of a mechanical adjustment member, such as a lever or a ring nut, not illustrated, connected to said grinding means 22.

According to possible variants it can also be provided that the granulometry detector 38 comprises an optical reader, such as a camera suitable for acquiring an image of the coffee powder, or a beam reflected therefrom and a processing unit suitable for receiving data from the optical reader and estimating the granulometry level on the basis of such data.

The machine 10 further comprises an interface 30 by means of which information can be acquired on the characteristics of the type of coffee beans used for preparing the beverage, i.e., of the coffee beans that are introduced and/or are present in the container 11. Such information comprises at least the origin and roasting level of the coffee beans.

Information related to the granulometry level set on the machine 10, which in this case can be directly provided by the user, can also be acquired by means of the interface 30. In this case the interface 30 itself can act as acquisition means of the granulometry 27.

According to embodiments, the interface 30 can comprise a touch-sensitive screen, or commands by which a consumer can command the start of preparation of a beverage, select one or more characteristics of the beverage to be prepared, such as taste intensity, beverage "length", or other.

According to embodiments, the interface 30 can be installed on the machine 10, for example installed on a frame 31.

According to possible embodiments, the interface 30 can be provided, additionally or alternatively, on an electronic device 32, for example a smartphone, a tablet or other similar device, on which a dedicated software application can be implemented.

The machine 10 comprises a control unit 35, which is connected to the interface 30 and is configured to adjust the setting parameters of the machine 10, i.e., of one or more of its components, in order to obtain a beverage with certain properties.

In the case of an interface 30 made on an electronic device 32, it can be provided that it communicates directly with the control unit 35 or by means of a "cloud" type platform 33 through a wireless communication network by means of an Internet provider.

According to further embodiments, the control unit 35 can comprise a command unit 35a provided in the machine 10 and a processing unit 35b provided in the platform 33, which can communicate directly with each other, or through the software application implemented on the electronic device 32.

In other embodiments, both the command unit 35a and the processing unit 35b can be provided on the machine 10, or on the platform 33 or even on the electronic device 32.

The control unit 35 is configured to adjust the pre-infusion parameters of a dose of coffee powder as a function of at least the origin and the roasting level of the beans and possibly also their granulometry level.

According to embodiments, the control unit 35 is configured to implement an algorithm for determining at least one quantity of coffee powder and at least one pre-infusion parameter for said quantity of powder as a function of the origin, the roasting level of the beans and possibly a granulometry level of the coffee powder in order to perform at least a first optimization of the operating parameters of the machine 10.

According to embodiments, the at least a first optimization of the operating parameters of the machine 10 can be performed on the basis of a beverage to be prepared.

According to an embodiment, said beverage to be prepared can be a specific reference beverage, for example a normal Espresso coffee, i.e., neither lungo nor ristretto, and on the basis of such optimization, specific modifications can subsequently be provided in relation to different types of beverages, such as lungo, ristretto, strong, double, or other coffee.

In particular, according to embodiments, the at least a first optimization can be performed following a request to start an optimization procedure by a user, for example provided by means of the interface 30.

According to other embodiments, the at least a first optimization can be performed for each beverage preparation, as a function of the characteristics of the beverage selected from time to time.

The control unit 35 can also be configured to implement an algorithm based on artificial intelligence, which monitors the extraction parameters of the machine 10 over time to verify that they remain consistent with the set parameters and automatically adjusts at least the pre-infusion parameters so as to compensate for any detected deviations of the extraction parameters with respect to the set parameters.

In particular, the control unit 35 adjusts the pre-infusion parameters in order to minimize the adjustments of the grinder 12 to modify the granulometry of the coffee powder. In other words, before requesting a possible adjustment of the distance between the grinders 22a, 22b, the control unit 35 provides to modify other parameters such as the quantity of coffee or the quantity of water to be used at least during a pre-infusion step.

Moreover, the control unit 35 can also be configured to implement an algorithm so as to perform a second and finer optimization of the operating parameters on the basis of at least one extraction parameter measured during the preparation of a beverage and of feedback provided by the consumer on such a beverage.

The machine 10 can also comprise a memory unit 34 in which the algorithm can be stored, together with any operating parameters, coefficients, or reference values related to the characteristics of the coffee beans and/or powder to be used.

The memory unit 34 can be installed on-board the machine, and can be physically connected to the control unit 35, or can be physically separate therefrom, but connected by means of a wireless communications network.

The functioning of the machine 10, which also corresponds to a method according to the invention, comprises:

- receiving a command for preparing a beverage;
- providing an infusion chamber with a dose of coffee powder;
- performing a pre-infusion step of said dose of powder;
- performing an infusion step of said dose of powder and dispensing the beverage.

According to embodiments, the method according to the invention comprises at least one adjustment step that provides to perform at least a first optimization of the operating parameters of the machine 10 as a function of the type of coffee beans.

In particular, the method according to the invention provides to receive an indication regarding the origin and the roasting level of the beans and to execute an algorithm to define at least a quantity of coffee Q_coffee of coffee powder to be used for said dose of powder, as a function of at least the origin of the beans and the selected beverage, and a quantity of water Q_water to be used in said pre-infusion step, which is determined at least as a function of said defined quantity of coffee Q_coffee and the roasting level of said beans.

The quantity of coffee Q_coffee is defined on the basis of the origin of the coffee beans. For example, it can be provided that for coffee beans of "Arabica" origin a first quantity is defined, for coffee beans of "Robusta" origin a second quantity is defined, preferably greater than the first quantity, and for coffee beans that provide a mixture of Arabica and Robusta a third quantity is defined, preferably comprised between the first and the second quantity.

According to other embodiments, which will be described later, the quantity of coffee Q_coffee can be defined either on the basis of the origin of the beans, or on the basis of other parameters, such as the roasting level of the beans and/or the granulometry. This allows to obtain a more punctual optimization.

According to further embodiments, and as will be better described later in the disclosure, the method according to the invention provides to monitor one or more extraction parameters of the machine 10 over time in order to verify that the values remain close to specific defined target values for the set operating parameters, and possibly to automatically modify at least the pre-infusion parameters in order to compensate for any deviations of at least one detected extraction parameter with respect to respective set target values.

According to embodiments, the indication on the origin and the roasting level of the beans can be received by mean of the interface 30, for example input by a user, or even acquired by scanning a barcode or QR code, or downloaded from a website.

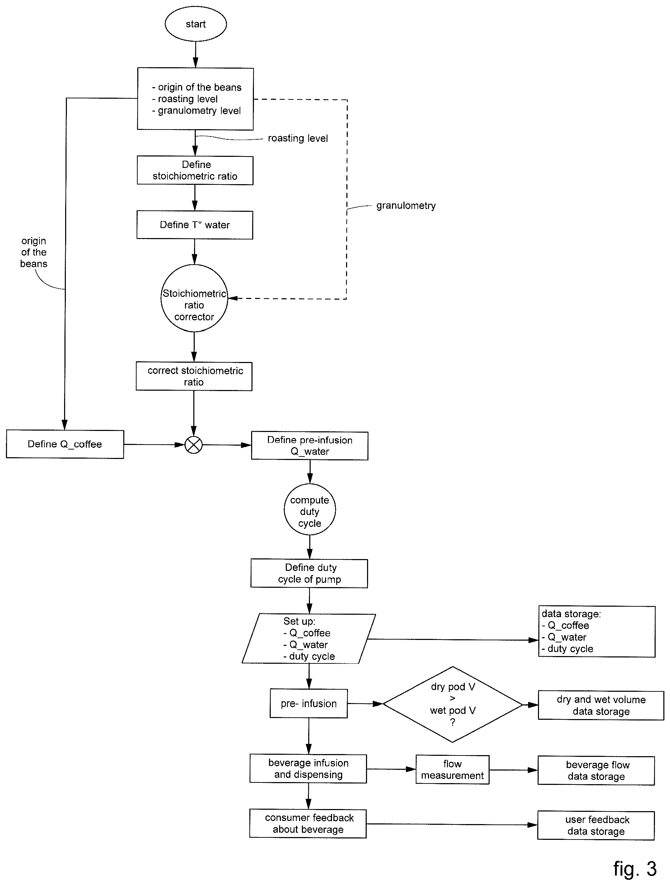

Fig. 3 exemplarily illustrates a flow chart of the procedure executed by the algorithm.

According to embodiments, the method provides to select and/or define a specific stoichiometric ratio value as a function of at least the roasting level of the beans, in which "stoichiometric ratio" means the ratio between a quantity of water to be used during the pre-infusion step and the quantity of coffee Q_coffee for a dose, and to define the quantity of water Q_water on the basis of the stoichiometric ratio.

For example, a plurality of stoichiometric ratio values can be stored in the memory unit 34, each related to a specific roasting level, e.g., "light", "medium", "dark", or any intermediate levels, and the control unit 35 can select the correct value from time to time on the basis of the received indications.

The method according to the present invention further provides to receive an indication regarding a granulometry level set for said coffee powder and to perform a correction of the value of the stoichiometric ratio as a function of said granulometry level.

According to embodiments, the granulometry level can be provided by a user by means of the interface 30.

Alternatively, or in addition, it can be provided that the control unit 35 receives the indication of the granulometry level by means of the granulometry detector 27, for example on the basis of the position between the grinders 22a, 22b.

According to possible variations, the method can also provide to define the quantity by weight of coffee powder for a dose also in relation to the roasting level and/or granulometry.

According to embodiments, the method provides to define the quantity of coffee powder Q_coffee according to the following formula:

$$Q\_coffee = \alpha \cdot granulometry^{-\beta} \cdot volum \qquad (1)$$

in which the coefficients $\alpha$ and $\beta$ depend on the roasting level.

The volume can correspond to the volume of a dry pod, i.e., the volume occupied by a dose of dry and compressed coffee powder.

By way of example, the coefficient $\alpha$ can range from about 5 for a light roasting level, to about 10 for a dark roasting level.

By way of example, the coefficient $\beta$ can range from about 0.3 for a light roasting level, to about 0.6 for a dark roasting level.

According to embodiments, the method provides to define the quantity of pre-infusion water Q_water according to the following formula:

$$Q_{-water} = Q_{\_coffee} \cdot stoichiometric\ ratio \qquad (2)$$

According to further embodiments, the method provides to define the quantity of pre-infusion water Q_water also as a function of the granulometry. In such a case, the quantity of water Q_water can be calculated based on the following formula: (3)

$$(3)$$
$$Q\_water = f^1(roasting, granulometry, volum)$$
$$\cdot f^2\ (roasting, granulometry)$$

Fig. 2 exemplarily illustrates a graph in which a density of the coffee powder is reported in abscissa, while the granulometry is reported in ordinate. The curves indicate the trend of the relationship between the density of a dry powder pod, the granulometry and the roasting level for different types of coffee beans.

The density of the powder, which influences the volume of the pod, can also vary in relation to the origin of the beans. For example, "Arabica" beans are less dense than "Robusta" beans.

According to further embodiments, the indication of origin comprises not only the belonging of the beans to the "Arabica" or "Robusta" species, or possibly other minor species, but also further information about the variety or the actual place of origin of the beans. Furthermore, the altitude at which the beans are grown can also influence their density and the algorithm can be configured to possibly also consider this further information where available.

The curves basically follow a cubic type relationship, according to the following formula:

$$granulometry = C \cdot density^{-3} \qquad (4)$$

where C is a coefficient that depends on the roasting level and the origin of the beans.

The rightmost curves refer to beans having a light roasting level, while the leftmost curves refer to beans having a light roasting level. In particular, the curves C1-C8 correspond to the following types of beans:

Table 1

|  |  | Type of coffee beans | | Density | | | Weight | | |
|---|---|---|---|---|---|---|---|---|---|
|  | Roasting | Origin | G2 | G5 | G7 | G2 | G5 | G7 |
| C1 | Light | A 100% | 0.64 | 0.51 | 0.44 | 12.78 | 10.25 | 8.76 |
| C2 | Dark | A 100% | 0.58 | 0.47 | 0.39 | 11.57 | 9.45 | 7.89 |
| C3 | Light | A 80% - R 20% | 0.62 | 0.51 | 0.45 | 12.32 | 10.27 | 8.90 |
| C4 | Light | A 60% - R 40% | 0.61 | 0.52 | 0.45 | 12.11 | 10.46 | 8.91 |
| C5 | Light | A. 100% | 0.59 | 0.49 | 0.44 | 11.78 | 9.80 | 8.79 |
| C6 | Light | R. 100% | 0.59 | 0.49 | 0.43 | 11.71 | 9.87 | 8.67 |
| C7 | Very dark | A. 100% | 0.58 | 0.43 | 0.27 | 11.59 | 8.69 | 7.32 |
| C8 | Very light | A. 100% | 0.60 | 0.55 | 0.49 | 11.91 | 11.01 | 9.82 |

In the table, A. refers to "Arabica", R. refers to "Robusta" and G2, G5 and G7 refer to three different granulometry levels, indicatively between 250-300 $\mu$m, 460-490 $\mu$m and 740-760 $\mu$m.

As can also be seen in the graph of fig. 2, considering a granulometry range between about 200 $\mu$m and about 750 $\mu$m, the density of the coffee powder can vary overall up to 30-35%. Considering an intermediate granulometry range between 400 $\mu$m and 500 $\mu$m, corresponding to that of commercially available coffee powder, the density can also vary by 10-13 % within such a range.

It is therefore very important to also consider granulometry as a parameter on the basis of which to correct the stoichiometric ratio and thus the quantity of pre-infusion water to be used.

In fact, the absorption capacity of coffee powder is related to both the roasting level and the granulometry. In particular, the absorption capacity increases as the roasting level increases, so dark beans, i.e., very roasted, absorb more than light beans, which are not very roasted.

Furthermore, the absorption capacity also increases with the increase of the granulometry, so that a very fine powder absorbs less liquids than a coarser powder.

The parameters of quantity by weight of coffee powder, quantity of pre-infusion water, corrective factors for stoichiometric ratio as a function of granulometry, or others, can be stored in the memory unit 34, or calculated from time to time based on data and tables stored therein.

For example, for each possible combination of origin, roasting level and granulometry level, specific sets of operating parameters S1,..., SN to be used can be stored in the memory unit 34, which comprise at least the quantity by weight of powder and the quantity of pre-infusion water.

As can be seen in the graph of fig. 3, the method can also provide to set a different temperature of the pre-infusion water, which can possibly also be maintained for the infusion step, as a function of the roasting level. This allows to obtain an optimal extraction of the aromatic substances for each type of bean.

In particular, for light beans that are hardly roasted, the temperature of the water T can be decreasing between a maximum and a minimum value as the roasting level increases. Exemplarily, the temperature can be set to about 96 °C for light beans, about 94 °C for intermediate roasted beans and about 92 °C for dark beans.

According to embodiments, once the quantity of pre-infusion water to be used has been defined, the method provides to calculate a duty cycle with which to control the water feed means 19, in the case of the pump, in order to maintain the time, or duration, of the pre-infusion step constant.

Thereby, in every situation and for all types of coffee, a sufficient contact time between the water and the coffee powder is ensured, without requiring extending the pre-infusion time, thus ensuring the dispensing of the beverage according to the times established by the rules.

Duty cycle means the fraction of time in which the pump is kept on within a defined period of time. The larger the fraction, the greater the quantity of water that the pump feeds in the unit of time.

By way of example, the pre-infusion time $\Delta t\_pi$ can be kept constant at a value between 4 and 5 seconds.

According to embodiments, the duty cycle can be calculated based on the following formula:

$$duty\ cycle = \frac{Q\_water}{maximum\ pump\ flow\ rate} \cdot \frac{1}{\Delta t\_pi} \qquad (5)$$

where the maximum pump flow rate is a fixed parameter defined by design, Q_water is a value that can be calculated using one of the formulae (2) or (3) above and $\Delta t\_pi$ is the desired value for the duration of the infusion time.

By turning the pump on and off periodically according to the defined duty cycle, it is thus possible to provide the correct quantity of water Q_water in the pre-infusion time $\Delta t\_pi$ from time to time.

According to embodiments, the duty_cycle for each possible combination of coffee bean types and granulometry level can also be stored in the memory unit 34 together with the other operating parameters S1,...,SN.

Below, Table 2 shows by way of example some values of quantity of powder Q_coffee, quantity of water Q_water, stoichiometric ratio, and duty cycle for different types of coffee beans.

Table 2

| Origin | Roasting | Q_coffee [g] | Stoichiometric ratio [cc/g] | Q_water [cc] | Duty_cycle [%] | $\Delta t\_pi$ |
|---|---|---|---|---|---|---|
| Arabica 100% | Light | 9 | 0.8 | 7.2 | 32 | 4.5 |
| | Medium | 9 | 0.9 | 8.1 | 36 | 4.5 |
| | Dark | 9 | 1 | 9 | 40 | 4.5 |
| Mixture 50%/50% | Light | 9.5 | 0.8 | 7.6 | 34 | 4.5 |
| | Medium | 9.5 | 0.9 | 8.6 | 38 | 4.5 |
| | Dark | 9.5 | 1 | 9.5 | 42 | 4.5 |

(continued)

| Origin | Roasting | Q_coffee [g] | Stoichiometric ratio [cc/g] | Q_water [cc] | Duty_cycle [%] | Δt_pi |
|---|---|---|---|---|---|---|
| Robusta 100% | Light | 10 | 0.8 | 8 | 36 | 4.5 |
| | Medium | 10 | 0.9 | 9 | 40 | 4.5 |
| | Dark | 10 | 1 | 10 | 44 | 4.5 |

Once the operating parameters have been determined, or selected by the memory unit 34, the method then provides to start the grinding device 12 and/or the dosing device 28 to supply the desired quantity of powder Q_coffee in the chamber 14, and subsequently to activate the water feed means 19 according to the defined duty_cycle to start the pre-infusion step.

Before the activation of the water feed means 19, the powder can be compressed to obtain a pod.

Once the pre-infusion step is complete, the infusion step can be started, during which the water feed means 19 are activated to feed a quantity of water consistent with the type and quantity of beverage requested by a user.

The operating parameters used for dispensing the beverage can be stored and memorized in the memory unit 34.

According to embodiments, the method can further comprise measuring the volume of the coffee powder pod in the chamber 14 before and after the pre-infusion step, and comparing the two values to verify that the volume of the dry pod is correctly greater than the volume of the wet pod.

According to further embodiments, the method can further provide to store the data related to the volume of the pod in the memory unit 34 in order to be able to perform further checks on the functioning of the machine 10.

According to embodiments, the method also provides to measure a flow rate, or a flow time, or dispensing time, of a beverage, during the infusion step, and possibly to store the data in the memory unit 34.

In accordance with further embodiments, the method according to the invention provides to receive feedback from a consumer regarding one or more characteristics of the prepared beverage.

According to embodiments, the acquisition of consumer feedback provides to ask the consumer a plurality of questions about one or more visual, olfactory and/or taste characteristics of the brewed coffee beverage and to receive the relative answers.

According to embodiments, the characteristics can relate to one or more of the quantity of cream, the colour of the cream, the structure of the body, or even others, such as the colour of the coffee, the temperature of the coffee, the quantity of beverage, or the aroma. The questions can be of the multiple-choice type so as to facilitate both the acquisition and processing thereof.

According to embodiments, the method according to the invention provides to correct the operating parameters as a function of the feedback provided by the consumer, so as to obtain a second optimization of the machine that takes into account both the type of coffee beans and the consumer's tastes.

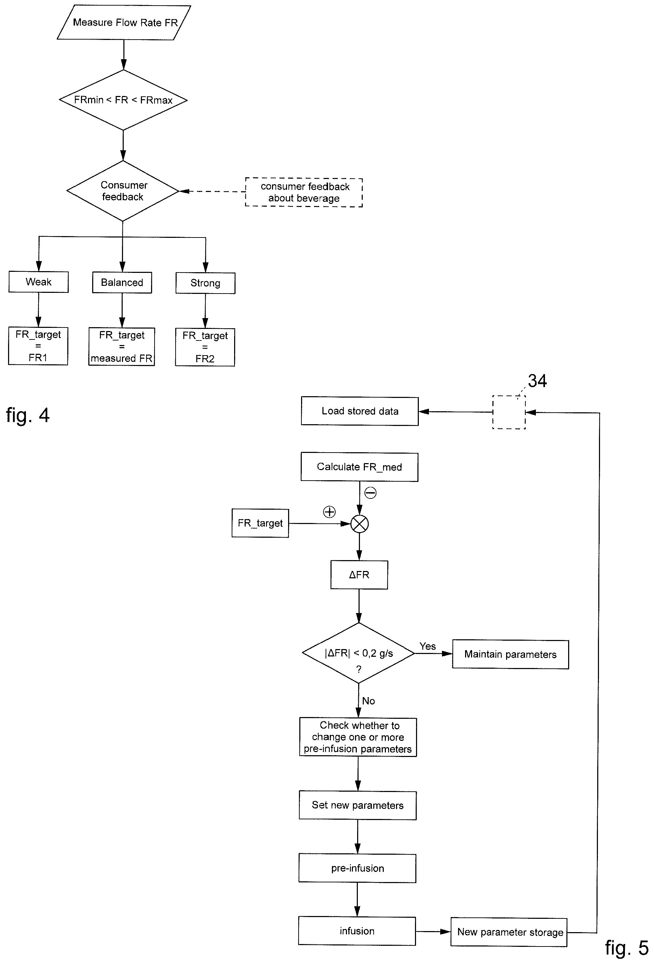

In the diagram shown in fig. 4 a part of the algorithm dedicated to the correction of the parameters according to a consumer's tastes is shown.

The correction of the operating parameters provides to first check if the infusion step has been carried out correctly.

In particular, the verification step provides to measure a flow rate FR during the infusion of the prepared beverage and to compare it with predefined threshold values FRmin, FRmax that delimit an ideal range of values within which the flow rate value FR should fall during a normal and correct functioning of the machine 10.

In the case in which the measured flow rate FR is within such threshold values FRmin, FRmax, then, as a function of the feedback provided by the user, the control unit 35 can define a specific target value FR_target, in order to make a subsequent beverage corresponding to a consumer's tastes.

When the measured flow rate FR is outside such threshold values FRmin, FRmax, the control unit 35 can define a target value FR_target between the threshold values FRmin, FRmax, which allows to improve the perception of tastes by the consumer.

By way of example, the threshold values FRmin and FRmax can assume the values of 2.6 g/s and 4 g/s, respectively. When FR < 2.6 the flow is too slow and the water remains in contact with the coffee powder for a long time, whereby it tends to extract an excessive quantity of aromatic substances that make the beverage very strong, while when FR > 4, the flow is too fast and thus remains little in contact with the coffee powder and thus extracts few substances, giving the beverage little aroma.

The control unit 35 is configured to modify the target flow rate FR_target in relation to the received data.

For example, if the measured flow rate value FR is between FRmin and FRmax and the consumer feels that the taste is "balanced", then the control unit 35 assumes the measured flow rate value as the new target value FR_target.

When instead the measured flow rate FR falls within the threshold values FRmin, FRmax, but the consumer provides negative feedback judging the taste of the beverage "weak" or respectively "strong", then the control unit 35 can increase or decrease the target value FR_target to make the flow respectively slower, or faster, setting new target values FR1, FR2, which can for example assume values close to the threshold values (e.g. FR1 = 2.8 g/s and FR2 = 3.8 g/s).

If the measured flow rate FR is lower than the minimum threshold value FRmin, or respectively higher than the maximum threshold value FRmax, the control unit 35 will in any case set a target value F_target, comprised within the threshold values FRmin, FRmax, the magnitude of which will depend on the judgement expressed by the consumer.

For example, if FR > FRmax and the taste is judged "weak", the new target value FR_target can be set at about 3.3 g/m, while if the taste is judged "balanced", it can be set at the value F1. Similarly, if FR < FRmin and the taste is judged "strong", the new target value FR_target can be set at about 3.3 g/m, while if the taste is judged "balanced", it can be set as F2.

The new target flow rate values FR_target can be stored in the memory unit 34 and subsequent comparisons will be made with respect thereto.

According to further embodiments, the method according to the invention can also provide to suggest to the consumer to change the type of beans used if it is not possible to suitably modify the flow rate to adapt the beverage to the consumer's tastes without compromising the functioning of the machine 10.

For example, a message can be displayed by means of the interface 30 when the measured flow rate FR is greater than the maximum threshold value FRmax, i.e., the flow is very fast, and the consumer still judges the taste of the beverage to be "strong", or when the measured flow rate FR is below the minimum threshold value FRmin and the consumer judges the beverage to be "weak". In the first case it will be suggested to choose a type of coffee beans with darker roasting level, whereas in the second case a type of coffee beans with lighter roasting level will be suggested.

According to embodiments, the suggestions to the user can also be provided by means of indication of a website, or other information, displayed on a user interface 30, e.g., installed on the machine 10, in written form with alphabetical characters, or in encoded form in a code readable by an electronic device 32 such as a smartphone, by a dedicated software application, e.g., a QR code, a barcode or other.

Fig. 5 exemplarily illustrates a part of the algorithm followed by the method according to the invention for monitoring the extraction parameters over time and evaluating whether and how to modify them to compensate for any deviations of one or more extraction parameters with respect to the respective target values.

Such an algorithm is preferably based on artificial intelligence and allows, in particular, to adapt the operating parameters of the machine 10, in particular those of pre-infusion, in order to obtain the best possible result for a certain predefined granulometry level. Only if it is not possible to suitably modify the pre-infusion parameters without compromising the functioning of the machine 10, the algorithm and therefore the method according to the invention, provides to modify the granulometry level.

For example, if during the optimization of the parameters the coffee is judged "weak" and the flow was "fast", i.e., FR > FRmax, the algorithm of the machine 10 modifies the operating parameters related to the stoichiometric ratio, the duty cycle of the pump, the quantity of water for pre-infusion, the degree of moisture of the pod, the quantity of coffee and possibly the granulometry, to adapt the type of coffee used to the reference values, so as to slow the flow and bring the intensity of the taste back to a "balanced" level. If even after the changes, the flow remains outside the range of defined threshold values, the method provides to modify the granulometry.

The method that follows the algorithm based on artificial intelligence provides to receive the data stored in the memory unit 34, related to the quantity of coffee Q_coffee, quantity of water Q_water, duty_cycle, comparison between dry and wet pod volume, and the data related to the flow FR measured during the infusion and to suitably process them.

In particular, the method provides to calculate an average value FR_med of the last N measured flow rates FR, subtracting it from the target value FR_target to calculate the difference ΔFR and to verify that such a difference ΔFR remains within an acceptable range, for example if it corresponds to FR_target ± 0.2g/s, or a percentage value such as ±10%.

In the event of a positive result, the method provides to keep the operating parameters already set.

In the event of a negative result, the method provides to evaluate whether and how to modify one or more pre-infusion operating parameters, and possibly the granulometry, to return the flow rate to the target value FR_target.

If necessary, the method provides to possibly calculate and define the new operating parameters to be used and to store them in the memory unit 34 to be used in the beverage preparation operations.

The possible new granulometry level set, if modified, can also be stored in the memory unit 34 to be used in the subsequent operations of beverage preparation and machine functioning monitoring.

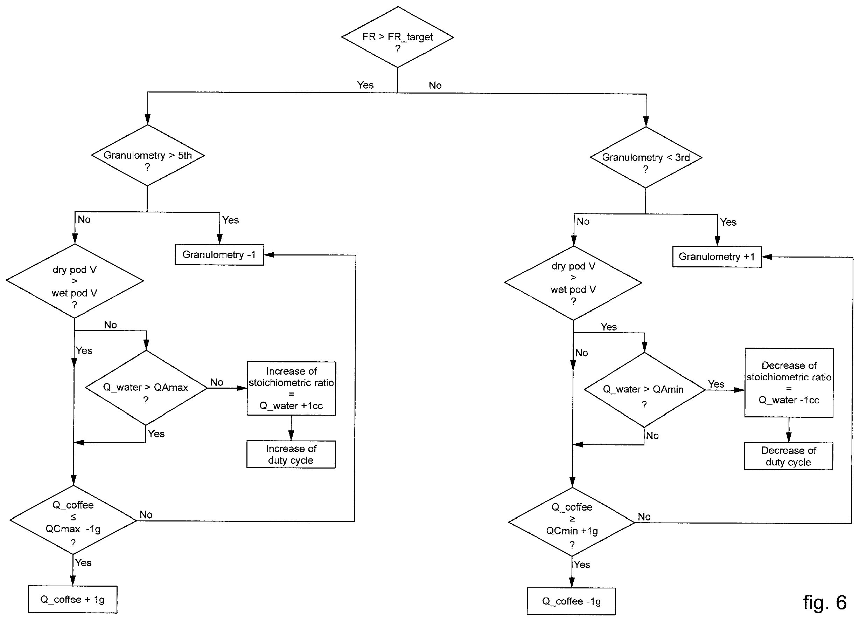

Fig. 6 shows in detail the verification step and any modification of the operating parameters.

In particular, the method according to the invention provides to verify whether the measured flow rate FR is greater than or less than the target value FR_target and, subsequently, to verify the set granulometry level of the powder, on the basis of the data detected by the granulometry detector 27, for example on the basis of the position of the ring nut, or the distance between the grinders 22a, 22b.

If the flow is "too fast" (branch on the left in the graph of fig. 6), if the granulometry level is higher than a threshold value, for example 5th on 7-8 granulometry levels that can be set, i.e., the powder is ground coarsely, the method provides to set the granulometry to the lower level, for example the 4th.

If, on the other hand, the granulometry level is lower than the threshold level, then the method provides to consider the comparison between the dry and wet pod volume to determine whether to modify one or more of the quantity of coffee Q_coffee, or the quantity of water Q_water.

If the volume of the dry pod is greater than the volume of the wet pod, the method provides to verify whether the quantity of coffee Q_coffee is less than or equal to a maximum value QCmax - 1g.

In the event of a positive result, the quantity of coffee Q_coffee is increased, for example by 1g, up to the maximum value QCmax, while in the event of a negative result, the granulometry level is decreased, for example by 1 level, making the powder finer.

When, on the other hand, the volume of the dry pod is lower than the volume of the wet pod, the method provides to verify whether the quantity of water Q_water is greater than or equal to a predefined maximum value QAmax.

In the event of a positive result, also in this case the quantity of coffee Q_coffee is increased, while in the event of a negative result, the stoichiometric ratio is modified, increasing it. The new stoichiometric ratio can be calculated on the basis of a quantity of pre-infusion water increased by for example 1cc.

Returning to the flow/granulometry verification, if the flow is "too slow" (right branch in the graph of fig. 6), if the granulometry level is lower than a threshold value, for example 3rd out of 7-8 settable granulometry levels, i.e., the powder is ground very finely, the method provides to increase the granulometry, setting the upper level, for example the 4th.

If, on the other hand, the granulometry level is higher than the threshold level, then the method provides to consider the comparison between the dry and wet pod volume to determine whether to modify one or more of the quantity of coffee Q_coffee, or the quantity of water Q_water.

If the volume of the dry pod is less than the volume of the wet pod, the method provides to verify whether the quantity of coffee Q_coffee is greater than or equal to a minimum value QCmin + 1g.

In the event of a positive result, the quantity of coffee Q_coffee is decreased, for example by 1g, to the minimum value QCmin, while in the event of a negative result, the granulometry level is increased, making the powder coarser.

On the other hand, when the volume of the dry pod is greater than the volume of the wet pod, the method provides to verify if the quantity of water Q_water is greater than a predefined minimum value QAmin.

In the event of a negative result, the quantity of coffee Q_coffee is decreased again, for example by 1g, while in the event of a positive result, the stoichiometric ratio is decreased, calculating it on the basis of a quantity of pre-infusion water decreased by, for example, 1cc.

According to embodiments, if the stoichiometric ratio and/or the quantity of water Q_water is varied, the method provides to calculate and to update the new duty cycle for the pump, always in order to keep the pre-infusion time $\Delta t\_pi$ constant.

Therefore, the method according to the invention changes the granulometry level only if that set is very coarse or very fine, while for the intermediate levels, it provides to modify one or more operating parameters chosen from quantities of coffee, quantities of water, or stoichiometric ratio. Thereby, only rare and minimal adjustments are made to the distance between the grinders 22a, 22b, thus helping to extend the useful life thereof and to reduce the wear thereof.

It is clear that modifications and/or additions of parts may be made to the method and to the machine 10 disclosed herein, without departing from the scope of the present invention as defined by the claims.

It is also clear that, although the present invention has been described with reference to some specific examples, a person skilled in the art will be able to make many other equivalent forms of method and machine 10 for preparing coffee beverages, having the characteristics expressed in the claims and therefore all of which falling within the scope of protection defined thereby.

In the following claims, the references in parentheses have the sole purpose of facilitating reading and must not be considered as limiting factors of the scope of protection defined by the claims themselves.

**Claims**

1. Method for a machine (10) for preparing a coffee beverage, in which a dose of coffee powder is supplied to an infusion chamber (14) and a step of pre-infusion and subsequently a step of infusion of said dose of powder are performed in order to dispense said beverage, **characterized in that** said method performs at least a first optimization of the operating parameters of said machine (10) as a function of the type of coffee beans and of the granulometry level of said powder, in which a control unit (35) receives an indication regarding the species and roasting level of said beans and executes an algorithm able to define both the weight of a quantity of said coffee (Q_coffee) to be used for said dose of powder as a function at least of a beverage to be prepared and the species of said beans, and the quantity of water (Q_water) to be used in said pre-infusion step, which is determined by said quantity of coffee (Q_coffee) and by a stoichiometric ratio value that depends on the roasting level of said beans.

2. Method as in claim 1, **characterized in that** it provides to execute an algorithm to monitor at least one extraction parameter of said machine (10) over time during the preparation of said beverages in order to verify that said at least one extraction parameter remains close to a specific defined target value, and possibly automatically modify one or more operating parameters of said pre-infusion step in order to compensate for any detected deviations of at least one extraction parameter with respect to the defined target value.

3. Method as in claim 1 or 2, **characterized in that** it provides to compress said dose of powder in said chamber (14) in order to obtain a pod, to measure the volume of said pod before and after said pre-infusion step, and to compare the measured values to verify that the volume of the dry pod is correctly greater than the volume of the wet pod to evaluate if and how to modify said quantity of coffee (Q_coffee) and/or said quantity of water (Q_water).

4. Method as in claim 2, **characterized in that** if said extraction parameter is not close, said algorithm provides to verify whether a granulometry level set for said coffee powder is outside a range of defined values and, in the event of a positive result, to modify said granulometry level to bring it back within said range, while in the event of a negative result it provides to modify at least one of said quantity of coffee (Q_coffee), said quantity of water (Q_water) or said stoichiometric ratio.

5. Method as in any claim from 2 to 4, **characterized in that** said algorithm provides to verify whether said quantity of water (Q_water) and/or said quantity of coffee (Q_coffee) are set to respective maximum (QAmax, QCmax) and/or minimum (QAmin, QCmin) values, and whether it is possible to increase and/or decrease them while remaining within said values (QAmax, QCmax, QAmin, QCmin), or whether it is necessary to modify a granulometry level in order to compensate for any deviations with respect to the target values.

6. Method as in any claim hereinbefore, **characterized in that** it provides to calculate an activation and deactivation duty cycle with which to command water feed means (19) to supply said quantity of water (Q_water) in said chamber (14) in order to keep the duration of said pre-infusion step constant.

7. Method as in any claim hereinbefore, **characterized in that** it provides to perform a correction of the operating parameters of said machine (10) as a function of feedback provided by a consumer on the prepared beverage, so as to obtain a second, finer optimization of said machine (10), wherein said second optimization provides to preliminarily verify whether the infusion step has been correctly performed, i.e., if a flow rate (FR) measured during said infusion step is or is not within predefined threshold values (FRmin, FRmax) and possibly define a new target value (FR_target) for said flow rate, in order to maintain, or return, said flow rate within said threshold values (FRmin, FRmax) and at the same time make a subsequent beverage corresponding to the tastes of said consumer.

8. Method as in any claim hereinbefore, **characterized in that** it provides to suggest to the consumer to change the type of beans used in the event that it is not possible to suitably modify one or more operating parameters, in particular a flow rate, to adapt the beverage to the consumer's tastes without compromising the functioning of said machine (10), wherein said suggestion comprises one or more of a message or an indication to a website displayed on a user interface (30) in written form with alphabetical characters, or in encoded form in a code readable by an electronic device (32), such as a barcode or a QR code.

9. Method as in any claim hereinbefore, **characterized in that** said algorithm is configured to define the weight of the quantity of said coffee (Q_coffee) on the basis of the species of the beans and the roasting level.

10. Method as in any claim hereinbefore, **characterized in that** it provides to receive an indication also regarding a granulometry level for the coffee powder and said algorithm is configured to define the weight of the quantity of said coffee (Q_coffee) on the basis of the species of the beans, the roasting level and said granulometry level.

11. Method as in any claim hereinbefore, **characterized in that** said species is chosen from "Arabica", "Robusta", or a mixture of both.

12. Machine (10) for preparing beverages comprising a container (11) for coffee beans, a grinding unit (12) for grinding said beans with different granulometry levels, and an infusion unit (13) provided with a chamber (14) suitable to receive and contain a dose of coffee powder to be infused, which is connected to water feed means (15) and to means (16) for dispensing a beverage, a user interface (30) by means of which at least information on the type of coffee beans to be used can be acquired, **characterized in that** said machine (10) comprises a control unit (35) configured to implement a method as in any claim hereinbefore, in order to determine at least one quantity of coffee (Q_coffee) and at least one pre-infusion parameter for said quantity of coffee (Q_coffee) as a function at least of the species and roasting level of said beans and to perform at least a first optimization of the operating parameters of said machine (10).

13. Machine (10) as in claim 12, **characterized in that** said control unit (35) is configured to implement an algorithm for monitoring one or more extraction parameters of said machine (10) over time in order to verify that they remain consistent with set operating parameters and to automatically adjust at least said pre-infusion parameters in order to compensate for any deviations of said one or more extraction parameters detected with respect to defined target values.

14. Machine (10) as in claim 12 or 13, **characterized in that** it is provided with granulometry acquisition means (27) and said control unit (35) is configured to receive from the latter an indication regarding a set granulometry level and consequently adjust said pre-infusion parameters to adapt the functioning of said machine (10) on the basis of said set granulometry level.

15. Machine (10) as in any claim from 12 to 14, **characterized in that** it comprises at least one flow rate detector (23, 26) suitable to detect at least one extraction parameter of a flow during a preparation of a beverage and said control unit (35) is configured to implement an algorithm in order to automatically perform a second and finer optimization of said operating parameters on the basis of said at least one extraction parameter detected and of feedback provided by a consumer on the characteristics of said prepared beverage.


**Patentansprüche**

1. Verfahren für eine Maschine (10) zur Zubereitung eines Kaffeegetränks, bei dem eine Dosis Kaffeepulver einer Brühkammer (14) zugeführt wird und ein Vorbrühschritt und anschließend ein Brühschritt der Pulverdosis nacheinander durchgeführt werden, um das Getränk auszugeben, **dadurch gekennzeichnet, dass** das Verfahren mindestens eine erste Optimierung der Betriebsparameter der Maschine (10) in Abhängigkeit von der Art der Kaffeebohnen und der Korngrößenverteilung des Pulvers durchführt, wobei eine Steuereinheit (35) eine Angabe über die Sorte und den Röstgrad der Bohnen empfängt und einen Algorithmus ausführt, der sowohl das Gewicht einer für die Pulverdosis zu verwendenden Kaffeemenge (Q_coffee) in Abhängigkeit zumindest von einem zuzubereitenden Getränk und der Bohnensorte als auch die in dem Vorbrühschritt zu verwendende Wassermenge (Q_water), die durch die Kaffeemenge (Q_coffee) und einen vom Röstgrad der Bohnen abhängenden stöchiometrischen Verhältniswert bestimmt wird, definieren kann.

2. Verfahren nach Anspruch 1, **dadurch gekennzeichnet, dass** es die Ausführung eines Algorithmus vorsieht, um mindestens einen Extraktionsparameter der Maschine (10) während der Zubereitung der Getränke im Zeitverlauf zu überwachen, um zu überprüfen, ob der mindestens eine Extraktionsparameter nahe an einem bestimmten definierten Zielwert bleibt, und gegebenenfalls einen oder mehrere Betriebsparameter des Vorbrühschritts automatisch zu ändern, um etwaige festgestellte Abweichungen mindestens eines Extraktionsparameters vom definierten Zielwert auszugleichen.

3. Verfahren nach Anspruch 1 oder 2, **dadurch gekennzeichnet, dass** es vorsieht, die Pulverdosis in der Kammer (14) zu komprimieren, um eine Kapsel zu erhalten, das Volumen der Kapsel vor und nach dem Vorbrühschritt zu messen und die gemessenen Werte zu vergleichen, um zu überprüfen, ob das Volumen der trockenen Kapsel korrekt größer ist als das Volumen der feuchten Kapsel, um zu bewerten, ob und wie die Kaffeemenge (Q_coffee) und/oder die Wassermenge (Q_water) zu ändern sind.

4. Verfahren nach Anspruch 2, **dadurch gekennzeichnet, dass,** wenn der Extraktionsparameter nicht nahe liegt, der Algorithmus vorsieht, zu überprüfen, ob eine für das Kaffeepulver festgelegte Korngrößenverteilung außerhalb eines Bereichs definierter Werte liegt, und im Falle eines positiven Ergebnisses die Korngrößenverteilung so zu ändern, dass sie wieder innerhalb des Bereichs liegt, während er im Falle eines negativen Ergebnisses vorsieht, die Kaffeemengen (Q_coffee), die Wassermenge (Q_water) und/oder das stöchiometrische Verhältnis zu ändern.

5. Verfahren nach einem der Ansprüche 2 bis 4, **dadurch gekennzeichnet, dass** der Algorithmus vorsieht, zu überprüfen, ob die Wassermenge (Q_water) und/oder die Kaffeemenge (Q_coffee) auf jeweilige Maximalwerte (QAmax, QCmax) und/oder Minimalwerte (QAmin, QCmin) eingestellt sind, und ob es möglich ist, diese zu erhöhen und/oder zu verringern, während sie innerhalb der Werte (QAmax, QCmax, QAmin, QCmin) bleiben, oder ob es notwendig ist, eine Korngrößenverteilung zu ändern, um etwaige Abweichungen von den Zielwerten auszugleichen.

6. Verfahren nach einem der vorstehenden Ansprüche, **dadurch gekennzeichnet, dass** es vorsieht, einen Aktivierungs- und Deaktivierungs-Arbeitszyklus zu berechnen, mit dem Wasserzufuhrmittel (19) angesteuert werden, um die Wassermenge (Q_water) der Kammer (14) zuzuführen, um die Dauer des Vorbrühschritts konstant zu halten.

7. Verfahren nach einem der vorstehenden Ansprüche, **dadurch gekennzeichnet, dass** es vorsieht, eine Korrektur der Betriebsparameter der Maschine (10) in Abhängigkeit von einer Rückmeldung eines Verbrauchers zu dem zubereiteten Getränk durchzuführen, um eine zweite, feinere Optimierung der Maschine (10) zu erreichen, wobei die zweite Optimierung vorsieht, vorab zu überprüfen, ob der Brühschritt korrekt durchgeführt wurde, d. h. ob eine während des Brühschritts gemessene Durchflussrate (FR) innerhalb vordefinierter Schwellenwerte (FRmin, FRmax) liegt oder nicht, und gegebenenfalls einen neuen Zielwert (FR_target) für die Durchflussrate festzulegen, um die Durchflussrate innerhalb der Schwellenwerte (FRmin, FRmax) zu halten oder wiederherzustellen und gleichzeitig ein nachfolgendes Getränk herzustellen, das dem Geschmack des Verbrauchers entspricht.

8. Verfahren nach einem der vorstehenden Ansprüche, **dadurch gekennzeichnet, dass** es vorsieht, dem Verbraucher vorzuschlagen, die Art der verwendeten Bohnen zu ändern, falls es nicht möglich ist, einen oder mehrere Betriebsparameter, insbesondere eine Durchflussrate, in geeigneter Weise zu ändern, um das Getränk an den Geschmack des Verbrauchers anzupassen, ohne die Funktion der Maschine zu beeinträchtigen (10), wobei der Vorschlag eine Nachricht oder einen Hinweis auf eine Website, die auf einer Benutzeroberfläche (30) in schriftlicher Form mit alphabetischen Zeichen oder in codierter Form in einem von einer elektronischen Vorrichtung (32) lesbaren Code, wie beispielsweise einem Barcode oder einem QR-Code, angezeigt wird, umfasst.

9. Verfahren nach einem der vorstehenden Ansprüche, **dadurch gekennzeichnet, dass** der Algorithmus so konfiguriert ist, dass er das Gewicht der Kaffeemenge (Q_coffee) auf der Grundlage der Bohnensorte und des Röstgrades definiert.

10. Verfahren nach einem der vorstehenden Ansprüche, **dadurch gekennzeichnet, dass** es vorsieht, eine Angabe auch bezüglich einer Korngrößenverteilung für das Kaffeepulver zu empfangen, und dass der Algorithmus so konfiguriert ist, dass er das Gewicht der Kaffeemenge (Q_coffee) auf der Grundlage der Bohnensorte, des Röstgrades und der Korngrößenverteilung definiert.

11. Verfahren nach in einem der vorstehenden Ansprüche, **dadurch gekennzeichnet, dass** die Bohnensorte aus "Arabica", "Robusta" oder einer Mischung aus beiden ausgewählt ist.

12. Maschine (10) zur Zubereitung von Getränken, umfassend einen Behälter (11) für Kaffeebohnen, eine Mahlvorrichtung (12) zum Mahlen der Bohnen mit unterschiedlichen Korngrößenverteilungen und eine Brüheinheit (13) mit einer Kammer (14), die zur Aufnahme und zum Enthalten einer Dosis des zu brühenden Kaffeepulvers geeignet ist und die mit Wasserzufuhrmitteln (15) und Mitteln (16) zum Ausgeben eines Getränks verbunden ist, eine Benutzerschnittstelle (30), über die zumindest Informationen über die Art der zu verwendenden Kaffeebohnen abgerufen werden können, **dadurch gekennzeichnet, dass** die Maschine (10) eine Steuereinheit (35) umfasst, die so konfiguriert ist, dass sie ein Verfahren gemäß einem der vorstehenden Ansprüche implementiert, um zumindest eine Kaffeemenge (Q_coffee) und mindestens einen Vorbrühparameter für diese Kaffeemenge (Q_coffee) in Abhängigkeit von zumindest der Sorte und dem Röstgrad der Bohnen zu bestimmen und mindestens eine erste Optimierung der Betriebsparameter der Maschine (10) durchzuführen.

13. Maschine (10) nach Anspruch 12, **dadurch gekennzeichnet, dass** die Steuereinheit (35) so konfiguriert ist, dass sie einen Algorithmus zur Überwachung eines oder mehrerer Extraktionsparameter der Maschine (10) über die Zeit implementiert, um zu überprüfen, ob diese mit den eingestellten Betriebsparametern übereinstimmen, und um zumindest die Vorbrühparameter automatisch einzustellen, um etwaige festgestellte Abweichungen des einen oder der mehreren Extraktionsparameter von definierten Zielwerten auszugleichen.

14. Maschine (10) nach Anspruch 12 oder 13, **dadurch gekennzeichnet, dass** sie mit Mitteln (27) zur Erfassung der Korngrößenverteilung versehen ist, und die Steuereinheit (35) so konfiguriert ist, dass sie von diesen eine Angabe bezüglich einer eingestellten Korngrößenverteilung empfängt und folglich die Vorbrühparameter einstellt, um die Funktion der Maschine (10) auf der Grundlage der eingestellten Korngrößenverteilung anzupassen.

15. Maschine (10) nach einem der Ansprüche 12 bis 14, **dadurch gekennzeichnet, dass** sie mindestens einen Durchflussdetektor (23, 26) umfasst, der geeignet ist, mindestens einen Extraktionsparameter eines Durchflusses während der Zubereitung eines Getränks zu erfassen, und die Steuereinheit (35) so konfiguriert ist, dass sie einen Algorithmus implementiert, um automatisch eine zweite und feinere Optimierung der Betriebsparameter auf der Grundlage des mindestens einen erfassten Extraktionsparameters und einer Rückmeldung eines Verbrauchers zu den Eigenschaften des zubereiteten Getränks durchzuführen.

**Revendications**

1. Procédé pour une machine (10) pour préparer une boisson au café, dans lequel une dose de poudre de café est fournie à une chambre d'infusion (14) et une étape de pré-infusion et ensuite une étape d'infusion de ladite dose de poudre sont effectuées afin de distribuer ladite boisson, **caractérisé en ce que** ledit procédé effectue au moins une première optimisation des paramètres de fonctionnement de ladite machine (10) en fonction du type de grains de café et du niveau de granulométrie de ladite poudre, dans lequel une unité de commande (35) reçoit une indication concernant l'espèce et le niveau de torréfaction desdits grains et exécute un algorithme pouvant définir à la fois le poids d'une quantité dudit café (Q_coffee) à utiliser pour ladite dose de poudre en fonction au moins d'une boisson à préparer et de l'espèce desdits grains, et la quantité d'eau (Q_water) à utiliser dans ladite étape de pré-infusion, qui est déterminée par ladite quantité de café (Q_coffee) et par une valeur de rapport stœchiométrique du niveau de torréfaction desdits grains.

2. Procédé selon la revendication 1, **caractérisé en ce qu'**il prévoit d'exécuter un algorithme pour surveiller au moins un paramètre d'extraction de ladite machine (10) au fil du temps pendant la préparation desdites boissons afin de vérifier que ledit au moins un paramètre d'extraction reste proche d'une valeur cible définie spécifique, et éventuellement de modifier automatiquement un ou plusieurs paramètres de fonctionnement de ladite étape de pré-infusion afin de compenser tout écart détecté d'au moins un paramètre d'extraction par rapport à la valeur cible définie.

3. Procédé selon la revendication 1 ou 2, **caractérisé en ce qu'**il prévoit de comprimer ladite dose de poudre dans ladite chambre (14) afin d'obtenir une dosette, de mesurer le volume de ladite dosette avant et après ladite étape de pré-infusion, et de comparer les valeurs mesurées pour vérifier que le volume de la dosette sèche est correctement supérieur au volume de la dosette humide pour évaluer si et comment modifier ladite quantité de café (Q_coffee) et/ou ladite quantité d'eau (Q_water).

4. Procédé selon la revendication 2, **caractérisé en ce que** si ledit paramètre d'extraction n'est pas proche, ledit algorithme prévoit de vérifier si un niveau de granulométrie fixé pour ladite poudre de café est en dehors d'une plage de valeurs définies et, en cas de résultat positif, de modifier ledit niveau de granulométrie pour le ramener dans ladite plage, tandis qu'en cas de résultat négatif, il prévoit de modifier au moins l'un de ladite quantité de café (Q_coffee), de ladite quantité d'eau (Q_water) ou dudit rapport stœchiométrique.

5. Procédé selon l'une quelconque des revendications 2 à 4, **caractérisé en ce que** ledit algorithme prévoit de vérifier si ladite quantité d'eau (Q_water) et/ou ladite quantité de café (Q_coffee) sont réglées sur des valeurs maximales (QAmax, QCmax) et/ou minimales (QAmin, QCmin) respectives, et s'il est possible de les augmenter et/ou de les diminuer tout en restant dans lesdites valeurs (QAmax, QCmax, QAmin, QCmin), ou s'il est nécessaire de modifier un niveau de granulométrie afin de compenser tout écart par rapport aux valeurs cibles.

6. Procédé selon l'une quelconque des revendications précédentes, **caractérisé en ce qu'**il prévoit de calculer un cycle de service d'activation et de désactivation avec lequel commander des moyens d'alimentation en eau (19) pour fournir ladite quantité d'eau (Q_water) dans ladite chambre (14) afin de maintenir constante la durée de ladite étape de pré-infusion.

7. Procédé selon l'une quelconque des revendications précédentes, **caractérisé en ce qu'**il prévoit d'effectuer une correction des paramètres de fonctionnement de ladite machine (10) en fonction du retour d'information fourni par un consommateur sur la boisson préparée, afin d'obtenir une seconde optimisation plus fine de ladite machine (10), dans lequel ladite seconde optimisation prévoit de vérifier préalablement si l'étape d'infusion a été correctement effectuée, c'est-à-dire si un débit (FR) mesuré pendant ladite étape d'infusion est ou n'est pas dans les valeurs de seuil prédéfinies (FRmin, FRmax) et éventuellement de définir une nouvelle valeur cible (FR_target) pour ledit débit, afin de maintenir ou de retourner ledit débit dans lesdites valeurs de seuil (FRmin, FRmax) et en même temps de préparer une boisson suivante correspondant aux goûts dudit consommateur.

15

8. Procédé selon l'une quelconque des revendications précédentes, **caractérisé en ce qu'**il prévoit de suggérer au consommateur de changer le type de grains utilisés dans le cas où il n'est pas possible de modifier de manière appropriée un ou plusieurs paramètres de fonctionnement, en particulier un débit, pour adapter la boisson aux goûts du consommateur sans compromettre le fonctionnement de ladite machine (10), dans lequel ladite suggestion comprend un ou plusieurs d'un message ou d'une indication à un site Web affiché sur une interface utilisateur (30) sous forme écrite avec des caractères alphabétiques, ou sous forme codée dans un code lisible par un dispositif électronique (32), tel qu'un code à barres ou un code QR.

9. Procédé selon l'une quelconque des revendications précédentes, **caractérisé en ce que** ledit algorithme est configuré pour définir le poids de la quantité dudit café (Q_coffee) sur la base de l'espèce des grains et du niveau de torréfaction.

10. Procédé selon l'une quelconque des revendications précédentes, **caractérisé en ce qu'**il prévoit de recevoir une indication également concernant un niveau de granulométrie pour la poudre de café et ledit algorithme est configuré pour définir le poids de la quantité dudit café (Q_coffee) sur la base de l'espèce des grains, du niveau de torréfaction et dudit niveau de granulométrie.

11. Procédé selon l'une quelconque des revendications précédentes, **caractérisé en ce que** ladite espèce est choisie parmi "Arabica", "Robusta", ou un mélange des deux.

12. Machine (10) pour préparer des boissons comprenant un récipient (11) pour des grains de café, une unité de broyage (12) pour broyer lesdits grains avec différents niveaux de granulométrie, et une unité d'infusion (13) pourvue d'une chambre (14) appropriée pour recevoir et contenir une dose de poudre de café à infuser, qui est reliée à des moyens d'alimentation en eau (15) et à des moyens (16) pour distribuer une boisson, une interface utilisateur (30) au moyen de laquelle au moins des informations sur le type de grains de café à utiliser peuvent être acquises, **caractérisée en ce que** ladite machine (10) comprend une unité de commande (35) configurée pour mettre en œuvre un procédé selon l'une quelconque des revendications précédentes, afin de déterminer au moins une quantité de café (Q_coffee) et au moins un paramètre de pré-infusion pour ladite quantité de café (Q_coffee) en fonction au moins de l'espèce et du niveau de torréfaction desdits grains et pour effectuer au moins une première optimisation des paramètres de fonctionnement de ladite machine (10).

13. Machine (10) selon la revendication 12, **caractérisée en ce que** ladite unité de commande (35) est configurée pour mettre en œuvre un algorithme pour surveiller un ou plusieurs paramètres d'extraction de ladite machine (10) au fil du temps afin de vérifier qu'ils restent cohérents avec des paramètres de fonctionnement définis et pour ajuster automatiquement au moins lesdits paramètres de pré-infusion afin de compenser tout écart desdits un ou plusieurs paramètres d'extraction détectés par rapport à des valeurs cibles définies.

14. Machine (10) selon la revendication 12 ou 13, **caractérisée en ce qu'**elle est pourvue de moyens d'acquisition de granulométrie (27) et ladite unité de commande (35) est configurée pour recevoir de cette dernière une indication concernant un niveau de granulométrie défini et par conséquent ajuster lesdits paramètres de pré-infusion pour adapter le fonctionnement de ladite machine (10) sur la base dudit niveau de granulométrie défini.

15. Machine (10) selon l'une quelconque des revendications 12 à 14, **caractérisée en ce qu'**elle comprend au moins un détecteur de débit (23, 26) approprié pour détecter au moins un paramètre d'extraction d'un flux pendant une préparation d'une boisson et ladite unité de commande (35) est configurée pour mettre en œuvre un algorithme afin d'effectuer automatiquement une seconde optimisation plus fine desdits paramètres de fonctionnement sur la base dudit au moins un paramètre d'extraction détecté et d'une rétroaction fournie par un consommateur sur les caractéristiques de ladite boisson préparée.

fig. 1

fig. 2

EP 4 468 924 B1

fig. 3

18

fig. 4

fig. 5

fig. 6

Flowchart elements:

- FR > FR_target ?
  - Yes
  - No

(Yes branch):
- Granulometry > 5th ?
  - Yes → Granulometry -1
  - No → dry pod V > wet pod V ?
    - No → Q_water > QAmax ?
      - Yes
      - No → Increase of stoichiometric ratio = Q_water +1cc → Increase of duty cycle
    - Yes → Q_coffee ≤ QCmax -1g ?
      - Yes → Q_coffee + 1g
      - No

(No branch):
- Granulometry < 3rd ?
  - Yes → Granulometry +1
  - No → dry pod V > wet pod V ?
    - Yes → Q_water > QAmin ?
      - Yes → Decrease of stoichiometric ratio = Q_water -1cc → Decrease of duty cycle
      - No
    - No → Q_coffee ≥ QCmin +1g ?
      - Yes → Q_coffee -1g
      - No

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022003743 A
- WO 2021259548 A
- WO 2021199096 A
- US 2020093321 A